# EUROPÄISCHE PATENTSCHRIFT

(11) **EP 1 385 729 B1**
(45) Veröffentlichungstag und Bekanntmachung des Hinweises auf die Patenterteilung: **27.10.2004**
(21) Anmeldenummer: 02748676.0
(22) Anmeldetag: 26.04.2002
(51) Int. Cl.: B60T 13/68, F16J 15/06

(54) **ELEKTROPNEUMATISCHES DOPPELREGELVENTIL MIT EINER DICHTUNGSANORDNUNG**
ELECTROPNEUMATIC DOUBLE CONTROL VALVE COMPRISING A SEALING ARRANGEMENT
DOUBLE SOUPAPE DE REGULATION ELECTROPNEUMATIQUE COMPORTANT UN ENSEMBLE D'ETANCHEITE

(30) Priorität: 26.04.2001 DE 10120324
(43) Veröffentlichungstag der Anmeldung: 04.02.2004
(73) Patentinhaber: KNORR-BREMSE SYSTEME FÜR NUTZFAHRZEUGE GMBH, 80809 München (DE)
(72) Erfinder: ROETHER, Friedbert, 74389 Cleebronn (DE); DEJA, Siegmund, 71691 Freiberg (DE); SCHAFFERT, Eberhard, 71229 Leonberg (DE)
(86) Internationale Anmeldenummer: PCT/EP2002/004628
(87) Internationale Veröffentlichungsnummer: WO 2002/102635

(56) Entgegenhaltungen:
- DE-A- 2 627 166
- DE-A- 19 605 562
- US-A- 3 982 795
- US-A- 5 947 483

## Beschreibung

Die Erfindung betrifft ein elektropneumatisches Doppelregelventil für ein druckluftbetriebenes Fahrzeugbremssystem, das zentral auf einer mit zwei Bremsen ausgerüsteten Radachse angeordnet ist, mit einem gemeinsamen Relaisventilgehäuse, in dem für jede Bremse eine zugeordnete Regelventileinheit integriert ist, die zur Ventilbetätigung je einen axial verstellbaren und innerhalb einer zugeordneten Steuerkammer angeordneten Steuerkolben umfasst, welche je über eine in einem benachbarten Vorsteuerventilgehäuse untergebrachte elektromagnetische Vorsteuerventilanordnung zur unabhängigen Axialverstellung mit einem Steuerdruck beaufschlagbar ist, wobei das Vorsteuerventilgehäuse mit einem Relaisventilgehäuse über eine dazwischenliegende Dichtungsanordnung lösbar verbunden ist. Insbesondere betrifft die vorliegende Erfindung eine spezielle Ausgestaltung dieser Dichtungsanordnung.

Ein gattungsgemäßes Regelventil wird innerhalb eines Druckluftbremssystems eines Fahrzeuges eingesetzt, um einen Bremsdruck entsprechend der gewünschten Bremswirkung auszuregeln. Eine vom Regelventil ausgehende Bremsleitung steht gewöhnlich zu diesem Zweck mit einem Bremszylinder am Fahrzeugrad in Verbindung, der die zum Bremsen des Fahrzeugrades benötigte Bremskraft für eine hieran angeschlossene Scheiben- oder Trommelbremse erzeugt. Die Vorgabe des Druck-Sollwertes für das elektropneumatische Regelventil kann sowohl elektrisch als auch pneumatisch erfolgen. Die pneumatische Ansteuerung wird meist jedoch nur zur Sicherheit im Falle eines Ausfalls der elektrischen Ansteuerung genutzt.

Ein derartiges elektropneumatisches Regelventil ist aus der DE 196 05 562 A1 bekannt. Das Regelventil besitzt einen großflächigen innenliegenden Steuerkolben, der innerhalb einer im Relaisventilgehäuse angeordneten Steuerkammer untergebracht ist. Der Steuerkolben trennt die Steuerkammer von einer gegenüberliegenden Arbeitskammer. Seitens der Arbeitskammer ist am Steuerkolben ein koaxialer Hohlzapfen ausgebildet, der zur Betätigung einer benachbarten Ventilsitzanordnung dient. Die Ventilsitzanordnung schaltet durch eine axiale Verstellung eines federverspannten Ventilrohres den Druckluftfluss zwischen einem außen liegenden Bremsleitungsanschluss, einem Speisedruckanschluss sowie einem Entlüftungsanschluss. Über eine Vorsteuerventilanordnung wird die Steuerkammer mit einem Steuerdruck beaufschlagt, welcher auf einen Steuerkolben wirkt. Die Vorsteuerventilanordnung besteht hier aus zwei elektropneumatischen Vorsteuerventilen, die durch eine koordinierte Bestromung der integrierten elektrischen Spulen ein Ansteigen, Halten oder Absenken des Steuerdrucks innerhalb der Steuerkammer bewirken, der auf der gegenüberliegenden Seite des Steuerkolbens einen Arbeitsdruck für den Bremszylinder erzeugt. Das Vorsteuerventilgehäuse ist über einen die Arbeitskammer zur Atmosphäre hin abdichtenden Dichtring mit dem Relaisventilgehäuse lösbar verbunden.

Neben der vorstehend beschriebenen Ausführungsform eines elektropneumatischen Regelventils mit einer einzigen integrierten Regelventileinheit sind im Stand der Technik auch Doppelregelventile bekannt, bei denen in einem gemeinsamen Relaisventilgehäuse zwei Regelventileinheiten integriert sind. Diese Anordnung. wird gewöhnlich für Hinterachsen von Fahrzeugen verwendet, bei denen eine zentrale Anordnung am Rahmen möglich ist. Das Doppelregelventil steuert insoweit beide den Rädern der Radachse zugeordnete Bremsen an.

Beim Gießen des gemeinsamen Relaisventilgehäuses sowie auch des hiermit verbundenen Vorsteuerventilgehäuses tritt das Problem auf, dass die exakte relative Lage der beiden benachbarten Steuerkammern nicht zuverlässig sichergestellt werden kann. Neben diesen gussbedingten Gehäusetoleranzen sind auch die verwendeten Dichtringe toleranzbehaftet. Infolgedessen kann sich eine ungünstige Toleranzkette ergeben, so dass die Dichtheit zwischen dem Relaisventilgehäuse und dem Vorsteuerventilgehäuse nicht immer gewährleistet ist. Außerdem werden bei der manuellen Montage vereinzelt Dichtringe vergessen, so dass ein hoher Nacharbeitsaufwand entsteht.

Es ist daher die Aufgabe der vorliegenden Erfindung, ein elektropneumatisches Doppelregelventil der vorstehend beschriebenen Art dahingehend weiter zu verbessern, dass eine einfach zu montierende Dichtungsanordnung gefunden wird, die eine zuverlässige Abdichtung zwischen dem Relaisventilgehäuse und dem Vorsteuerventilgehäuse sicherstellt.

Die Aufgabe wird ausgehend von einem elektropneumatischen Doppelregelventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Aufgabe wird erfindungsgemäß durch eine einstückige Dichtungsanordnung gelöst, die aus zwei, je einer Steuerkammer zugeordneten, im Wesentlichen ringförmigen Dichtringabschnitten besteht, die miteinander über mehrere dazwischenliegende angeformte Brückenstege in Verbindung stehen, weiche derart voneinander beabstandet zwischen den beiden Dichtringabschnitten angeordnet sind, das über ein elastisches Verbiegen der Brückenstege ein definierter Toleranzausgleich der relativen Lage beider Dichtringabschnitte in der Verbindungsebene zwischen dem Vorsteuerventilgehäuse und dem Relaisventilgehäuse erfolgt.

Der Vorteil der erfindungsgemäßen Dichtungsanordnung besteht darin, dass aufgrund der Einstückigkeit einzelne Dichtungsbestandteile bei der Montage nicht vergessen werden können. Darüber hinaus bietet die eintstückige Ausbildung der Dichtungsanordnung ideale Voraussetzungen für eine Automatisierung des Montagevorganges. Die Flexibilität in der Beabstandung beider Dichtringabschnitte ermöglicht in einfacher Weise einen Ausgleich von gussbedingten Toleranzen am Relaisventilgehäuse und/oder Vorsteuerventilgehäuse. Der Toleranzausgleich wird erfindungsgemäß durch die elastisch verbiegbaren Brückenstege in einfacher Weise möglich. Hierdurch können Toleranzen fast kräftefrei ausgeglichen werden.

Gemäß einer die Erfindung verbessernden Maßnahme ist mindestens einer der Brückenstege relativ starr ausgebildet und mindestens ein gegenüberliegend beabstandet angeordneter Brückensteg relativ elastisch ausgebildet, so dass der Toleranzausgleich über eine Winkelverstellung der beiden Dichtringabschnitte zueinander erfolgt. Wegen des starr ausgebildeten Brückensteges entsteht eine gut handhabbare und in ihrer einstückigen Form relativ stabile Dichtungsanordnung, wobei über den elastischen Brückensteg ein Toleranzausgleich erfolgt.

Vorzugsweise sind die Brückenstege nach außen gerichtet bogenförmig ausgebildet, um das Verbiegen zu erleichtern. Darüber hinaus können die Brückenstege zur Vermeidung eines Verdrillens beim Verbiegen mit einem runden bis ovalen Querschnitt geformt sein.

Gemäß einer weiteren, die Erfindung verbessernden Maßnahme können zwei benachbarte Brückenstege gemeinsam mit angrenzenden Bogenteilen der Dichtringabschnitte zur Abdichtung eines zwischen dem Vorsteuerventilgehäuse und dem Relaisventilgehäuse verlaufenden Druckmittelkanals dienen. Ein solcher Druckmittelkanal kann beispielsweise vorgesehen werden, um Speisedruck vom Speisedruckanschluss am Reiaisventilgehäuse für die im Vorsteuerventilgehäuse untergebrachten Vorsteuerventile zur Verfügung zu stellen. Zur Abdichtung dieses Druckmittelkanals braucht insoweit kein separates Dichtungselement vorgesehen werden.

Um eine ausreichende Formstabilität der Dichtungsanordnung zu gewährleisten, können die beiden aus einem elastischen Material bestehenden Dichtringabschnitte sowie die starren Brückenstege mit einer innenliegenden Verstärkungseinlage aus einem starren Material, wie Stahl, Aluminium oder Kunststoff, versehen werden.

Vorzugsweise bestehen die Dichtringabschnitte jeweils aus einem sich radial in der Verbindungsebene zwischen dem Vorsteuerventilgehäuse und dem Relaisventilgehäuse erstreckenden Dichtungshauptabschnitt und einem außenradialen Dichtungsabschnitt zur statischen Gehäuseabdichtung sowie einem innenradialen Dichtungsabschnitt zur dynamischen Steuerkolbenabdichtung. Zusätzlich können im Bereich des Dichtungshauptabschnittes an mindestens einer Stelle auf dem Umfang des Dichtringabschnittes ein Durchbruch für einen zwischen dem Relaisventilgehäuse und dem Vorsteuerventilgehäuse verlaufenden ventilinternen Druckmittelkanal vorgesehen werden. Ein solcher Durchbruch kann auch als eine Fassung für ein in die Dichtungsanordnung integriertes Druckausgleichselement genutzt werden. Das Druckausgleichselement ist für den Druckausgleich mit der Atmosphäre für nicht als Druckkammer genutzte ventilinteme Bereiche des Vorsteuerventilgehäuses vorgesehen.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Draufsicht auf ein Relaisventilgehäuse eines Doppelregelventils,
- Figur 2: eine Draufsicht auf eine bei dem Relaisventilgehäuse nach Figur 1 genutzte Dichtungsanordnung, und
- Figur 3: einen Längsschnitt durch die Dichtungsanordnung gemäß Figur 2.

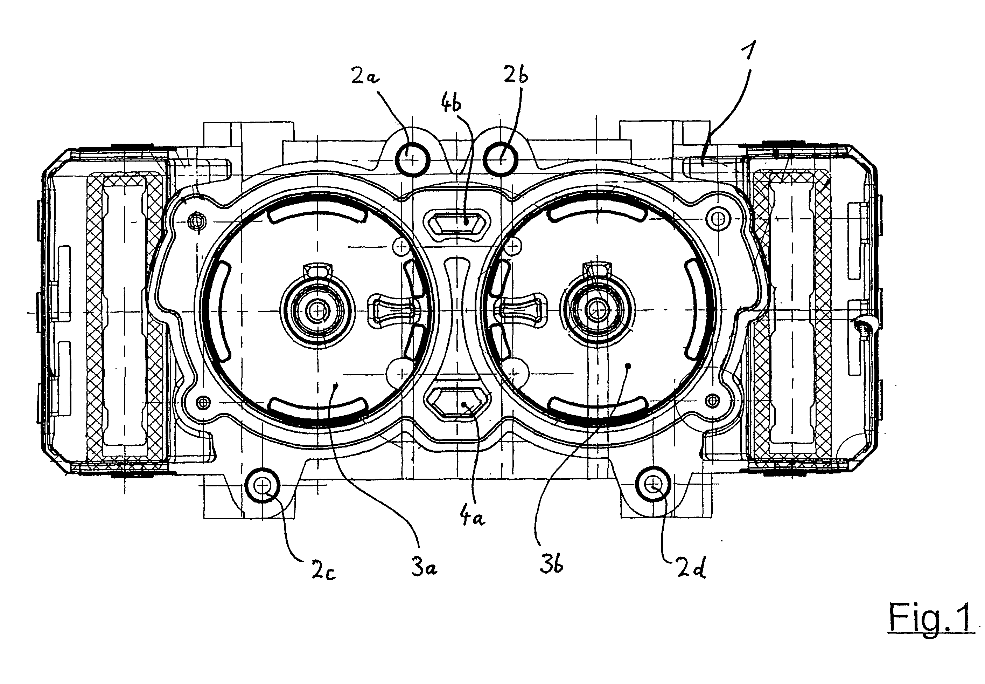

Ein elektropneumatisches Doppelregelventil weist gemäß Figur 1 ein Relaisventilgehäuse 1 auf, das mit einem (hier nicht dargestellten) Vorsteuerventilgehäuse verbunden ist. Das Vorsteuerventilgehäuse ist an seiner Kontaktfläche zum Retaisventi(gehäuse 1 korrespondierend nach Art einer üblichen Gehäusehälfte ausgebildet und mit dem Relaisventilgehäuse 1 über diverse Bohrungen 2a-2d verschraubt. Innerhalb des Relaisventilgehäuses 1 sind zwei achsparallele Steuerkammern 3a, 3b ausgebildet, in denen (hier ebenfalls nicht weiter dargestellte) Steuerkolben zur Ventilbetätigung nach Art eines vorgesteuerten Sitzventils angeordnet sind. Die Beaufschlagung der Steuerkolben erfolgt über eine im Vorsteuerventilgehäuse untergebrachte Vorsteuerventilanordnung, die aus einzelnen elektrisch schaltbaren Magnetventilen besteht. Zwischen den beiden Steuerkammern 3a und 3b sind zwei zwischen dem Refaisventilgehäuse 1 und dem Vorsteuerventilgehäuse verlaufende Druckmittelkanäle 4a, 4b vorgesehen, die der ventilintemen Druckluftführung zwischen dem Vorsteuerventilgehäuse und dem Relaisventilgehäuse 1 dienen. In dem die beiden Steuerkammern 3a, 3b sowie die beiden ventilinternen Druckmittelkanäle 4a, 4b umgebenden stirnseitigen Bereich des Relaisventilgehäuses 1 ist eine Dichtungsanordnung vorgesehen, die eine abgedichtete Verbindung zwischen dem Relaisventilgehäuse 1 und dem Vorsteuerventilgehäuse ermöglicht.

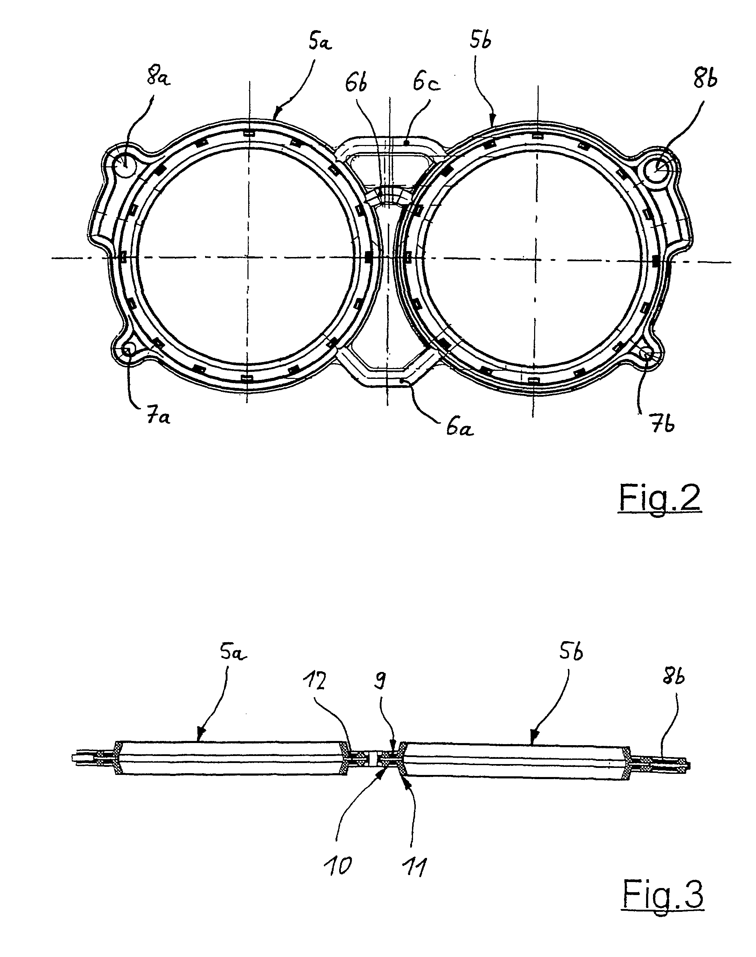

Diese Dichtungsanordnung ist gemäß Figur 2 aus zwei Dichtringabschnitten 5a, 5b gebildet, die je einer (hier nicht dargestellten) Steuerkammer zugeordnet sind. Beide Dichtringabschnitte 5a, 5b sind über drei angeformte Brückenstege 6a-6c miteinander verbunden. Hierbei ist der Brückensteg 6a relativ elastisch ausgebildet, wogegen die beiden gegenüberliegend beabstandet angeordneten Brückenstege 6b und 6c relativ starr sind. Infolgedessen ist der mit dieser Dichtungsanordnung angestrebte Toleranzausgleich über eine Winkelverstellung der beiden Dichtringabschnitte 5a, 5b zueinander möglich. Die beiden benachbarten Brückenstege 6b und 6c dienen gemeinsam mit den angrenzenden Bogenteilen der Dichtringabschnitte 5a und 5b zur Abdichtung des (in dieser Figur nicht gezeigten) Mittelkanals 4b, der zwischen dem Vorsteuerventilgehäuse und dem Relaisventilgehäuse verläuft. Der andere Druckmittelkanal 4a wird über ein Zusammenwirken der Brückenstege 6a und 6b in Verbindung mit den angrenzenden Bogenteilen der Dichtringabschnitte 5a und 5b abgedichtet. In der Peripherie der Dichtringabschnitte 5a, 5b sind diverse Durchbrüche 7a, 7b vorgesehen, um eine abgedichtete Verbindung von zwischen dem Relaisventilgehäuse und dem Vorsteuerventilgehäuse verlaufenden ventilinternen Druckmittelkanälen zu gewährleisten. In zwei solcher Durchbrüche ist jeweils ein Druckausgleichselement 8a, 8b eingegossen, um einen geschützten Druckausgleich mit der Atmosphäre für nicht als Druckkammer genutzte ventilinteme Bereiche des Vorsteuerventilgehäuses zu schaffen. Durch die Integration der Druckausgleichselemente in die Dichtungsanordnung entfällt eine separate Montage in einem entsprechenden Gehäuseabschnitt.

Wie aus der Figur 3 hervorgeht, besteht jeder Dichtringabschnitt 5a, 5b aus einem sich radial in der Verbindungsebene zwischen dem Vorsteuerventilgehäuse und dem Relaisventilgehäuse 1 erstreckenden Dichtungshauptabschnitt 9, an dem ein außenradialer Dichtungsabschnitt 10 zur statischen Gehäuseabdichtung sowie ein innenradialer Dichtungsabschnitt 11 zur dynamischen Steuerkolbenabdichtung angeformt ist. In die Dichtringabschnitte 5a, 5b ist ferner eine aus einem starren Material bestehende VerstärkungseinJage 12 eingegossen, um die Formstabilität der Dichtungsanordnung sicherzustellen.

Die Erfindung ist nicht beschränkt auf das vorstehend angegebene bevorzugte Ausführungsbeispiel. Es sind vielmehr auch Abwandlungen hiervon denkbar, die trotz anderer konstruktiver Ausgestaltung von der beanspruchten technischen Lehre Gebrauch machen. Die Erfindung ist insbesondere nicht beschränkt auf die Anzahl und Funktion der im Bereich der Dichtringabschnitte vorgesehenen Durchbrüche zur Abdichtung diverser neben den beiden Steuerkammem verlaufender ventilinterner Druckmittelkanäle.

### Bezugszeichenliste

- 1: Relaisventilgehäuse
- 2: Bohrung
- 3: Steuerkammer
- 4: Druckmittelkanal
- 5: Dichtringabschnitt
- 6: Brückensteg
- 7: Durchbruch
- 8: Druckausgleichselement
- 9: Dichtungshauptabschnitt
- 10: Dichtungsabschnitt, außenradial
- 11: Dichtungsabschnitt, innenradial
- 12: Verstärkungseinlage

## Patentansprüche

1. Elektropneumatisches Doppelregelventil für ein druckluftbetriebenes Fahrzeugbremssystem, das zentral auf einer mit zwei Bremsen ausgerüsteten Radachse angeordnet ist, mit einem gemeinsamen Relaisventilgehäuse (1), in dem für jede Bremse eine zugeordnete Regelventileinheit integriert ist, die zur Ventilbetätigung je einen axial verstellbaren und innerhalb einer zugeordneten Steuerkammer (3a, 3b) angeordneten Steuerkolben umfasst, welcher je über eine in einem benachbarten Vorsteuerventilgehäuse untergebrachte elektromagnetische Vorsteuerventilanordnung zur unabhängigen Axialverstellung mit einem Steuerdruck beaufschlagbar sind, wobei das Vorsteuerventilgehäuse mit dem Relaisventilgehäuse (1) über eine dazwischenliegende Dichtungsanordnung lösbar verbunden ist, **dadurch gekennzeichnet, dass** die Dichtungsanordnung einstückig ausgebildet ist und aus zwei, je einer Steuerkammer (3a, 3b) zugeordneten im wesentlichen ring-förmigen Dichtringabschnitten (5a, 5b) besteht, die miteinander über mehrere dazwischenliegende angeformte Brückenstege (6a bis 6c) in Verbindung stehen, welche derart voneinander beabstandet zwischen den beiden Dichtringabschnitten (5a, 5b) angeordnet sind, dass über ein elastisches Verbiegen der Brückenstege (6a bis 6c) ein definierter Toleranzausgleich der relativen Lage beider Dichtringabschnitte (5a, 5b) in der Verbindungsebene zwischen dem Vorsteuerventilgehäuse und dem Relaisventilgehäuse (1) erfolgt.

2. Elektropneumatisches Doppelregelventil gemäß Anspruch 1, **dadurch gekennzeichnet, dass** mindestens ein Brückensteg (6b, 6c) relativ starr ausgebildet ist und mindestens ein gegenüberliegend beabstandet angeordneter Brückensteg (6a) relativ elastisch ausgebildet ist, so dass der Toleranzausgleich über eine Winkelverstellung der beiden Dichtringabschnitte (5a, 5b) zueinander erfolgt.

3. Elektropneumatisches Doppelregelventil gemäß Anspruch 1, **dadurch gekennzeichnet, dass** die Brückenstege (6a bis 6c) nach außen gerichtet bogenförmig ausgebildet sind, um das Verbiegen zu erleichtern.

4. Elektropneumatisches Doppelregelventil gemäß Anspruch 1, **dadurch gekennzeichnet, dass** die Brückenstege (6a bis 6c) einen runden bis ovalen Querschnitt aufweisen, um ein Verdrillen beim Verbiegen zu vermeiden.

5. Elektropneumatisches Doppelregelventil nach einem der vorstehenden Ansprüche,
**dadurch gekennzeichnet, dass** zwei benachbarte Brückenstege (6b, 6c oder 6b, 6a) gemeinsam mit angrenzenden Bogenteilen der Dichtringabschnitte (5a, 5b) zur Abdichtung eines zwischen dem Vorsteuerventilgehäuse und dem Relaisventilgehäuse (1) verlaufenden Druckmittelkanals (4a bzw. 4b) dient.

6. Elektropneumatisches Doppelregelventil nach einem der vorstehenden Ansprüche,
**dadurch gekennzeichnet, dass** die beiden aus einem elastischen Material bestehenden Dichtringabschnitte (5a, 5b) sowie die starren Brückenstege (6b, 6c) mit einer innenliegenden Verstärkungseinlage (12) aus einem starren Material versehen ist.

7. Elektropneumatisches Doppelregelventil nach Anspruch 6,
**dadurch gekennzeichnet, dass** die Verstärkungseinlage (12) aus Stahl, Aluminium, Messing oder aus einem starren Kunststoff besteht.

8. Elektropneumatisches Doppelregelventil nach einem der vorstehenden Ansprüche,
**dadurch gekennzeichnet, dass** die Dichtringabschnitte (5a, 5b) jeweils aus einem sich radial in der Verbindungsebene zwischen dem Vorsteuerventilgehäuse und dem Relaisventilgehäuse (1) erstreckenden Dichtungshauptabschnitt (9) und einem auβenradialen Dichtungsabschnitt (10) zur statischen Gehäuseabdichtung sowie einem innenradialen Dichtungsabschnitt (11) zur dynamischen Steuerkolbenabdichtung bestehen.

9. Elektropneumatisches Doppelregelventil nach Anspruch 8,
**dadurch gekennzeichnet, dass** im Bereich des Dichtungshauptabschnittes (9) an mindestens einer Stelle auf dem Umfang des Dichtringabschnitte (5a, 5b) ein Durchbruch (7a, 7b) vorgesehen ist, um eine Verbindung eines vom Relaisventilgehäuse (1) zum Vorsteuerventilgehäuse verlaufenden ventilinternen Druckmittelkanals zu gewährleisten.

10. Elektropneumatisches Doppelregelventil nach Anspruch 8,
**dadurch gekennzeichnet, dass** im Bereich des Dichtungshauptabschnittes (9) an mindestens einer Stelle auf dem Umfang des Dichtringabschnitte (5a, 5b) ein Druckausgleichselement (8a, 8b) platziert ist, um einen geschützten Druckausgleich mit der Atmosphäre für nicht als Druckkammer genutzte Bereiche des Vorsteuerventilgehäuses zu schaffen.

## Claims

1. Electropneumatic dual control valve for vehicle brake system operating on compressed air, which is centrally disposed on a wheel axle equipped with two brakes, comprising a common relay valve housing (1) in which a respective control valve unit associated with each brake, which includes an axially adjustable control plunger disposed inside an associated control chamber (3a, 3b), which control plunger is adapted to be acted upon via a respective electromagnetic pilot valve means accommodated in an adjacent pilot valve housing, with a control pressure for the independent axial adjustment, with said pilot valve housing being detachably connected to said relay valve housing (1) via an interposed sealing means,
**characterised in that** said sealing means presents an integral configuration and consists of two respective substantially annular sealing ring sections (5a, 5b) whereof each is associated with a respective control chamber (3a, 3b), which sealing ring sections are connected to each other via several integrally formed bridging webs (6a to 6c) that are spaced from each other between said two sealing ring sections (5a, 5b) in such a manner that on account of resilient bending of said bridging webs (6a to 6c) a defined tolerance compensation of the relative position of said two sealing sections (5a, 5b) will be achieved in the connecting plane between said pilot valve housing and said relay valve housing (1).

2. Electropneumatic dual control valve according to Claim 1,
**characterised in that** at least one bridging web (6b, 6c) has a comparatively rigid configuration and at least one opposite bridging web (6a) disposed at a spacing therefrom presents a comparatively resilient configuration so that the tolerance compensation is achieved on account of an annular adjustment of said two sealing ring sections (5a, 5b) relative to each other.

3. Electropneumatic dual control valve according to Claim 1,
**characterised in that** said bridging webs (6a to 6c) present an outwardly oriented arcuate configuration so as to facilitate said bending.

4. Electropneumatic dual control valve according to Claim 1,
**characterised in that** said bridging webs (6a to 6c) present a round to oval cross-sectional area in order to avoid twisting in bending.

5. Electropneumatic dual control valve according to any of the preceding Claims,
**characterised in that** two adjacent bridging webs (6b, 6c or 6b, 6a), jointly with adjacent arc segments of said sealing ring sections (5a, 5b), serve to provide sealing of a compressed-medium passage (4a or 4b, respectively) extending between said pilot valve housing and said relay valve housing (1).

6. Electropneumatic dual control valve according to any of the preceding Claims,
**characterised in that** said two sealing ring sections (5a, 5b) consisting of a resilient material as well as said rigid bridging webs (6a, 6c) are provided with an inside reinforcing insert (12) made of a rigid material.

7. Electropneumatic dual control valve according to Claim 6,
**characterised in that** said reinforcing insert (12) consists of steel, aluminium, brass or a rigid synthetic material.

8. Electropneumatic dual control valve according to any of the preceding Claims,
**characterised in that** each of said sealing ring sections (5a, 5b) consists of a principal sealing segment (9) extending radially in the connecting plane between said pilot valve housing and said relay valve housing (1) and an outer radial sealing segment (10) for static housing sealing as well as of an inside radial sealing segment (11) for dynamic control plunger sealing.

9. Electropneumatic dual control valve according to Claim 8,
**characterised in that** in the region of said principal sealing segment (9), at least at one site on the periphery of said sealing ring sections (5a, 5b), a passage (7a, 7b) is provided for ensuring a communication of a compressed-medium passage internal of the valve, which extends from said relay valve housing (1) to said pilot valve housing.

10. Electropneumatic dual control valve according to Claim 8,
**characterised in that** in the region of said principal sealing segment (9), at least at one site on the periphery of said sealing sections (5a, 5b), a pressure equalizer element (8a, 8b) is placed for creating a protected pressure compensation with the atmosphere for those area of said pilot valve housing, which are not used as pressure chamber.

## Revendications

1. Double soupape de régulation électropneumatique pour systèmes de freinage des véhicules, qui fonctionnent à l'air comprimé, qui est disposée, en position centrale, sur un essieu de roue, équipé de deux freins, comprenant un corps commun de soupape de relais (1), dans lequel une unité respective à soupape de commande est disposée, qui est affectée à chaque frein et comprend un piston de commande ajustable en sens axial, qui est disposé à l'intérieur d'une chambre de commande affectée (3a, 3b), ce piston de commande étant apte à être soumis à l'action d'une pression de commande, via un moyen respectif à soupape pilote électromagnétique reçue dans un corps de soupape pilote adjacent, pour l'ajustement indépendant en sens axial, audit corps de soupape pilote étant relié, de façon amovible, audit corps de soupape de relais (1) via un ensemble d'étanchéité y interposé,
**caractérisée en ce que** ledit ensemble d'étanchéité présente une configuration intégrale et est composé par deux tronçons essentiellement annulaires respectifs de bague d'étanchéité (5a, 5b), dont chacun est affecté à une chambre de commande respective (3a, 3b), ces tronçons de bague d'étanchéité étant reliés l'un à l'autre via plusieurs entretoises de pont (6a à 6c) formées de manière intégrale, qui sont espacées l'une de l'autre entre lesdits deux tronçons de bague d'étanchéité (5a, 5b) d'une telle manière, qu'en vertu du pliage élastique desdites entretoises de pont (6a à 6c), il y a une compensation définie de tolérance pour la position relative desdits deux tronçons d'étanchéité (5a, 5b) sur le plan de connexion entre ledit corps de soupape pilote et ledit corps de soupape de relais (1).

2. Double soupape de régulation électropneumatique selon la revendication 1,
**caractérisée en ce qu'**au moins une entretoise de pont (6b, 6c) a une configuration relativement rigide et au moins une entretoise de pont (6a), disposée à un écart de la première, présente une configuration relativement élastique, d'une telle manière, que la compensation de tolérance soit achevée en vertu d'un ajustement annulaire desdits deux tronçons de bague d'étanchéité (5a, 5b) l'un relativement à l'autre.

3. Double soupape de régulation électropneumatique selon la revendication 1,
**caractérisée en ce que** lesdites entretoises de pont (6a à 6c) présentent une configuration en arc orienté vers l'extérieur afin de faciliter ledit pliage.

4. Double soupape de régulation électropneumatique selon la revendication 1,
**caractérisée en ce que** lesdites entretoises de pont (6a to 6c) présentent une section transversale ronde à ovale afin d'éviter une torsion au pliage.

5. Double soupape de régulation électropneumatique selon une quelconque des revendications,
**caractérisée en ce que** deux entretoises de pont (6b, 6c or 6b, 6a) adjacentes, ensemble avec des segments adjacents d'arc desdits tronçons de bague d'étanchéité (5a, 5b), servent à assurer l'étanchéité d'un canal de milieu sous pression (4a ou respectivement 4b), qui s'étend entre ledit corps de soupape pilote et ledit corps de soupape de relais (1).

6. Double soupape de régulation électropneumatique selon une quelconque des revendications,
**caractérisée en ce que** lesdits deux tronçons de bague d'étanchéité (5a, 5b), qui consistent en un matériau élastique, ainsi que lesdites entretoises de pont (6a, 6c) rigides sont munis d'un insert intérieur de renforcement (12) fait en un matériau rigide.

7. Double soupape de régulation électropneumatique selon la revendication 6,
**caractérisée en ce que** ledit insert (12) de renforcement est fait en acier, aluminium, laiton ou un matériau synthétique rigide.

8. Double soupape de régulation électropneumatique selon une quelconque des revendications,
**caractérisée en ce que** chacun desdits tronçons de bague d'étanchéité (5a, 5b) consiste en un segment principal d'étanchéité (9), qui s'étend en sens radial dans le plan de connexion entre ledit corps de soupape pilote et ledit corps de soupape de relais (1), et en un segment d'étanchéité radial extérieur (10) pour l'étanchéité statique du corps ainsi qu'en un segment d'étanchéité radial intérieur (11) four l'étanchéité dynamique du piston de commande.

9. Double soupape de régulation électropneumatique selon la revendication 8,
**caractérisée en ce que** dans la zone dudit segment principal d'étanchéité (9), à au moins un point le long de la périphérie desdits tronçons de bague d'étanchéité (5a, 5b), un passage (7a, 7b) est formé afin d'assurer une communication d'un passage de milieu sous pression, à l'intérieur de la soupape, qui s'étend à partir dudit corps de soupape de relais (1) jusqu'audit corps de soupape pilote.

10. Double soupape de régulation électropneumatique selon la revendication 8,
**caractérisée en ce que** dans la zone dudit segment principal d'étanchéité (9), à au moins point le long de la périphérie desdits tronçons d'étanchéité (5a, 5b), un moyen à égalisation de pression (8a, 8b) est placé afin de créer une compensation de pression protégée avec l'atmosphère pour ceux zones dudit corps de soupape pilote, qui ne sont pas utilisées en tant que chambre de pression.
